# EUROPEAN PATENT APPLICATION

(11) **EP 1 944 525 A1**
(43) Date of publication of application: **16.07.2008**
(21) Application number: 06746680.5
(22) Date of filing: 21.05.2006
(51) Int. Cl.: F16G 5/18, F16G 13/06

(54) **POWER TRANSMISSION CHAIN AND POWER TRANSMISSION DEVICE**

(30) Priority: 14.10.2005 JP 2005301034
(71) Applicant: JTEKT Corporation, Osaka-shi Osaka 542-8502 (JP)
(72) Inventor: KITAMURA, Kazuhisa, Osaka-shi, Osaka 5428502 (JP); KAMAMOTO, Shigeo, Osaka-shi, Osaka 5428502 (JP); YASUHARA, Shinji, Osaka-shi, Osaka 5428502 (JP); TADA, Seiji, Osaka-shi, Osaka 5428502 (JP); KUSTER, Joel, Osaka-shi, Osaka 5428502 (JP)
(74) Representative: Steil, Christian
(86) International application number: PCT/JP2006/310073
(87) International publication number: WO 2007/043209

(57) **Abstract**

Coupling members (50) are inserted into through-holes (9 and 10) in links (2) of a chain (1). The coupling member (50) includes first and second pins (3 and 4). Pairs of end portions (14 and 15, 27 and 28) of the first and second pins (3 and 4) with respect to an orthogonal direction (V) orthogonal to both a chain travel direction (X) and a chain width direction (W) are received by receiving portions (38 and 39, 40 and 41) provided to the corresponding through-holes (9 and 10) in the corresponding links (2). At least one of the end portions (14, 15, 27, and 28) includes a curved surface portion (14, 15, 32a, or 32a) received by the corresponding receiving portion (38, 39, 40, or 41). The curved surface portion (14, 15, 32a, or 32a) includes an apex portion (20, 22, 33, or 33) with respect to the orthogonal direction (V), and the curvature radius of the curved surface portion (14, 15, 32a, or 32a) is increased continuously or step by step as headed toward the apex portion (20, 22, 33, or 33).

## Description

### Technical Field

The present invention relates to a power transmission chain and a power transmission device.

### Background Art

Power transmission devices, such as a pulley-type continuously variable transmission (CVT) in an automobile, include a type provided with an endless power transmission chain wound around a pair of pulleys. Such power transmission chains include a type provided with links each having a pair of pin holes and coupling pins that couples these links one to another (see, for example, Patent Documents 1 through 4).
Of these references, Patent Document 2 describes a type that includes, as the coupling pins, a center pin disposed at the center inside the pin hole and a pair of locker pins disposed on both the sides of the center pin.

In Patent Document 2, both the side surfaces of the center pin are each in the form of a convex curved surface. Also, convex curved surfaces that abut on the corresponding convex curved surfaces of the center pin are provided to the pair of locker pins. Accordingly, when each locker pin comes into rolling contact with the center pin at a predetermined angle at a time, adjacent links are allowed to bend at a bending angle which is double the predetermined angle.
**Patent Document 1:**
Japanese Unexamined Patent Publication No. 2001-234983
**Patent Document 2:**
Japanese Unexamined Patent Publication No. 2001-234982
**Patent Document 3:**
Japanese Unexamined Patent Publication No. 08-312725
**Patent Document 4:**
Japanese Unexamined Patent Publication No. 2005-226831

### Disclosure of the Invention

### Problems to be Solved by the Invention

Also, power transmission chains in Patent Documents 3 and 4 include plural links each having a front through-hole and a rear through-hole aligned in the chain travel direction and plural pins that couple these links one to another. The plural pins include pins that are press-engaged in one of the front through-hole and the rear through-hole and pins that are loose-fit into the other one of the front through-hole and the rear through-hole. For the power transmission chains described above, there has been a request to further enhance durability. The invention has an object to solve the problems discussed above.

### Means for Solving the Problems

In order to solve the problems discussed above, one of the options would be to enhance the durability of the overall power transmission chain by making the pins larger for the press-engaged portion of the pin and the link to shape a gentler curve (curved surface) so that the durability of the links is enhanced by reducing stress induced on the links resulting from the load applied from the pins. In this case, however, the overall power transmission chain is increased in size. An increase in size of the power transmission chain is not preferable because making more compact devices is a strong request for automobiles or the like in which the pulley-type power transmission device is to be mounted. Accordingly, there has been a need for a power transmission chain to be enhanced in durability without increasing the size thereof.

The inventors of the present application achieved the invention on the basis of their finding that making the engagement state of the links and the pins in a most suitable condition can contribute to a reduction of stress induced on the links, which makes it possible to more enhance the durability of the power transmission chain without having to increase the size thereof.
A preferred aspect of the invention includes plural link units aligned in a chain travel direction, and plural coupling members that couple the plural link units to be bendable with respect to one another. The link units each include plural link plates aligned in a chain width direction orthogonal to the chain travel direction. Each link plate has through-holes. Each coupling member has a power transmission member inserted into the corresponding through-holes in the corresponding link plates. Each power transmission member has a pair of end portions with respect to an orthogonal direction that is orthogonal to both the chain travel direction and the chain width direction. Each end portion of each power transmission member is received by a receiving portion provided to the corresponding through-hole in the corresponding link plate. At least the one end portion of each power transmission member includes a curved surface portion received by the corresponding receiving portion. The curved surface portion includes an apex portion with respect to the orthogonal direction. A curvature radius of the curved surface portion is increased continuously or step by step as headed toward the apex portion.

According to this aspect, the curvature radius of the curved surface portion of the power transmission member is increased as headed toward the apex portion. Accordingly, the apex portion can be made into a more flat shape. Hence, when the receiving portions of the link plate receive load from the corresponding curved surface portions of the power transmission member, it is possible to suppress the occurrence of stress concentration at the peripheral portion of the through-hole in the link plate. Consequently, the durability of the link plate can be enhanced by suppressing fatigue thereof, which can enhance the durability of the power transmission chain markedly. In addition, because stress induced on the link due to insertion of the power transmission member is reduced, it is possible to make the power transmission member thinner with respect to the chain travel direction. Accordingly, a distance in the chain travel direction between the through-holes adjacent to each other in the chain travel direction can be made shorter by reducing the shape of the through-holes in size. Hence, many more power transmission members are pinched at a time by an object to which power is to be transmitted, such as pulleys. It is thus possible to achieve further enhancement of the allowable transmission torque of the power transmission chain. In addition, it is possible to achieve further enhancement of durability by reducing load per power transmission member.

### Brief Description of the Drawings

FIG. 1 is a perspective view schematically showing the configuration of a major portion of a chain-type continuously variable transmission as a power transmission device provided with a power transmission chain according to one embodiment of the invention.
FIG. 2 is a partial section of a drive pulley (driven pulley) and a chain of FIG. 1.
FIG. 3 is a section of a major portion of the chain.
FIG. 4 is a section taken on line IV-IV of FIG. 3 and showing a straight region of the chain.
FIG. 5 is a side view of a major portion in a bending region of the chain.
FIG. 6 is an enlarged section of a first pin.
FIG. 7 is an enlarged section of a second pin.
FIG. 8 is a side view of a major portion according to another embodiment of the invention.
FIG. 9 is a section of a major portion according to still another embodiment of the invention.
FIG. 10 is an enlarged view of a second pin of FIG. 9.
FIG. 11 is a section of a major portion according to still another embodiment of the invention.
FIG. 12 is a section of a major portion according to still another embodiment of the invention.
FIG. 13 is a partial section of a major portion according to still another embodiment of the invention.

### Best Mode for Carrying Out the Invention

Preferred embodiments of the invention will be described with reference to the accompanying drawings.

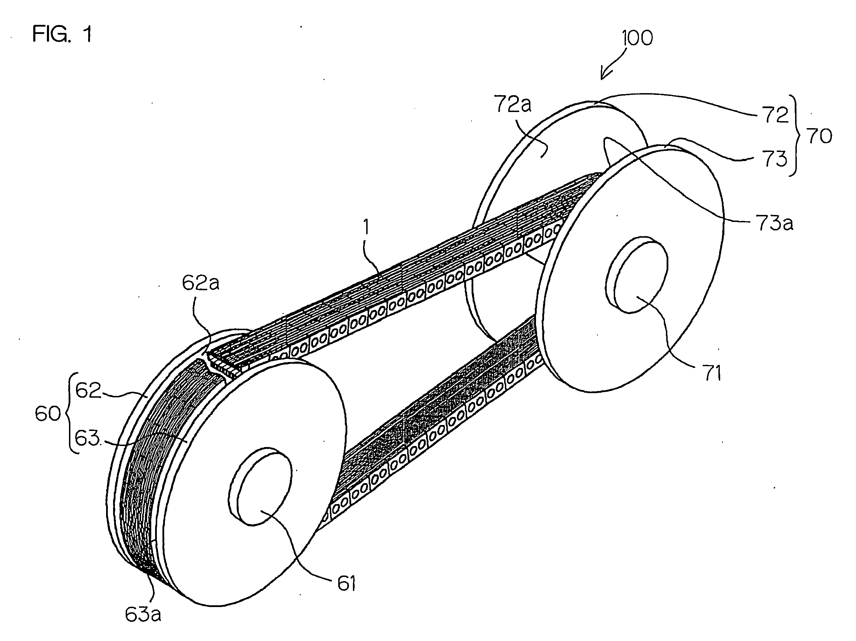

FIG. 1 is a perspective view schematically showing the configuration of a major portion of a chain-type continuously variable transmission (hereinafter, also referred to simply as the continuously variable transmission) as a power transmission device provided with a power transmission chain according to one embodiment of the invention. Referring to FIG. 1, a continuously variable transmission 100 is to be mounted on a vehicle, such as an automobile, and includes a drive pulley 60 made of metal (structural steel or the like) as a first pulley, a driven pulley 70 made of metal (structural steel or the like) as a second pulley, and an endless power transmission chain 1 (hereinafter, also referred to simply as the chain) wound around a pair of these pulleys 60 and 70. For ease of understanding, the partial section of the chain 1 is shown in FIG. 1.

While the continuously variable transmission 100 is driven, the chain 1 undergoes transitions alternately between a straight region where it is stretched straight and a bending region as a region wound around either one of the pair of pulleys 60 and 70, and transmits power between the pair of pulleys 60 and 70.

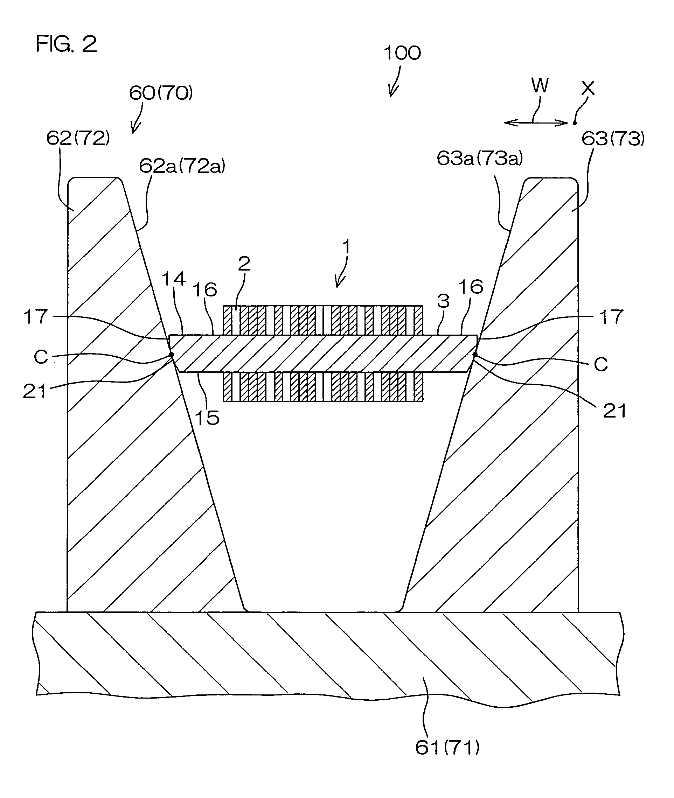

FIG. 2 is a partial section of the drive pulley 60 (driven pulley 70) and the chain 1 of FIG. 1. Referring to FIG. 1 and FIG. 2, the drive pulley 60 is attached in a together rotatable manner to an input shaft 61 that is coupled to a vehicle driving source in such a manner that power can be transmitted from the driving source. The drive pulley 60 includes a stationary sheave 62 and a movable sheave 63.

The stationary sheave 62 and the movable sheave 63 have a pair of mutually opposing sheave surfaces 62a and 63a, respectively. Each of the sheave surfaces 62a and 63a includes an inclined surface in the form of a circular conical surface. A groove is defined between these sheave surfaces 62a and 63a and the chain 1 is caught tightly and held in this groove.
A hydraulic actuator (not shown) to change the groove width is connected to the movable sheave 63. The groove width can be varied at speed change by moving the movable sheave 63 in the axial direction of the input shaft 61 (right-left direction in FIG. 2). Accordingly, the chain 1 is allowed to move in the radial direction of the input shaft 61 (top-bottom direction in FIG. 2), which makes it possible to change an effective radius of the pulley 60 with respect to the chain 1 (equivalent to a wound radius of the pulley 60).

In FIG. 2, reference characters to denote components of the driven pulley 70 corresponding to the counterparts of the drive pulley 60 are shown in parentheses. As are shown in FIG. 1 and FIG. 2, the driven pulley 70 is attached in a together rotatable manner to an output shaft 71 that is coupled to the drive wheel (not shown) in such a manner that power can be transmitted to the drive wheel. As with the drive pulley 60, the driven pulley 70 includes a stationary sheave 73 and a movable sheave 72. As with the drive pulley 60, the stationary sheave 73 and the movable sheave 72 have a pair of mutually opposing sheave surfaces 73a and 72a, respectively, to define a groove in which the chain 1 is to be caught tightly.

As with the movable sheave 63 of the drive pulley 60, a hydraulic actuator (not shown) is connected to the movable sheave 72 of the driven pulley 70, so that the groove width is varied at speed change by moving the movable sheave 72. It is thus possible to change an effective radius of the pulley 70 with respect to the chain 1 (equivalent to a wound radius of the pulley 70) by moving the chain 1.

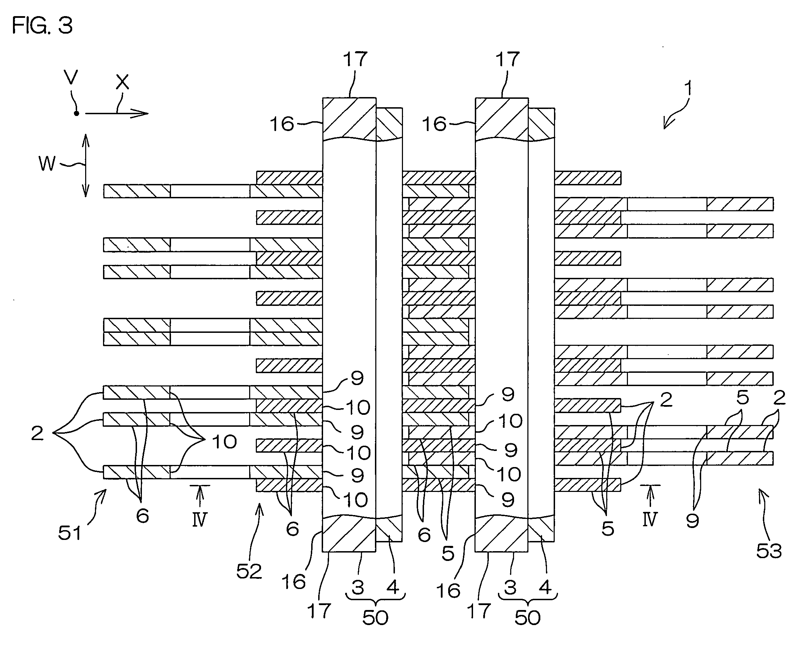

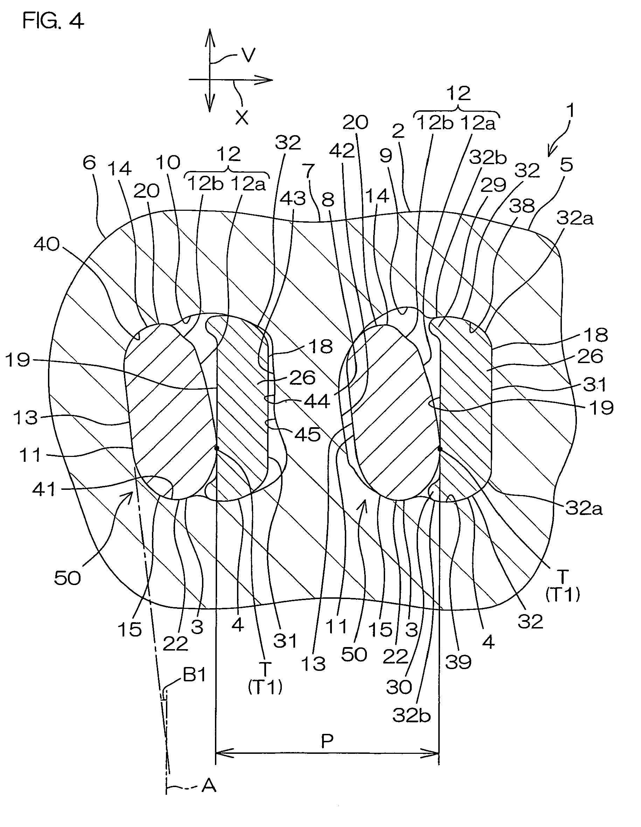

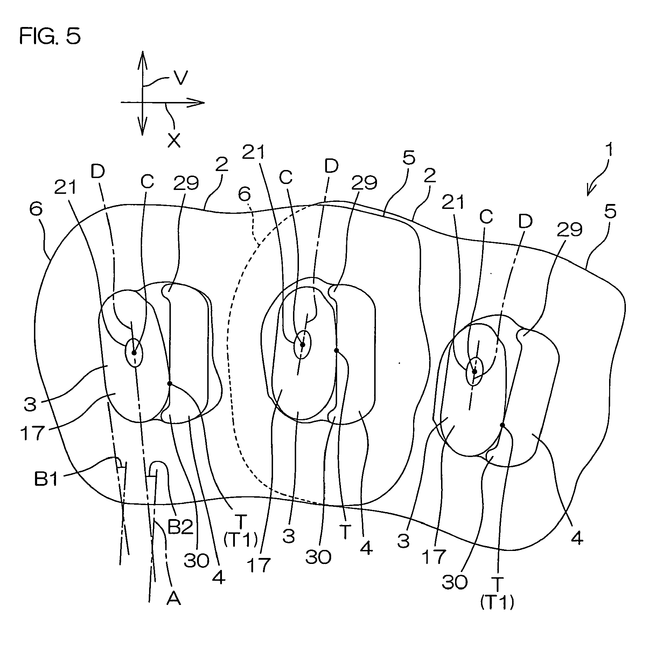

FIG. 3 is a section of a major portion of the chain 1. FIG. 4 is a section taken on line IV-IV of FIG. 3 and showing the straight region of the chain 1. FIG. 5 is a side view of a major portion of the bending region of the chain 1.
Hereinafter, the chain 1 will be described in reference to the straight region of the chain 1 when reference is made to FIG. 4, and in reference to the bending region of the chain 1 when reference is made to FIG. 5.

Referring to FIG. 3 and FIG. 4, the chain 1 includes links 2 as plural link plates and plural coupling members 50 that couple these links 2 to be bendable with respect to one another.
Hereinafter, a direction along the travel direction of the chain 1 is defined as the chain travel direction X, a direction orthogonal to the chain travel direction X and along the longitudinal direction of the coupling members 50 is defined as the chain width direction W, and a direction orthogonal to both the chain travel direction X and the chain width direction W is defined as the orthogonal direction V.

Each link 2 is in the form of a plate, and includes a front end portion 5 and a rear end portion 6 as a pair of end portions aligned from front to rear in the chain travel direction X, and an intermediate portion 7 disposed between the front end portion 5 and the rear end portion 6.
The front end portion 5 and the rear end portion 6 are provided with a front through-hole 9 as a first through-hole and a rear through-hole 10 as a second through-hole, respectively. The intermediate portion 7 has a pillar portion 8 as a partition between the front through-hole 9 and the rear through-hole 10. The pillar portion 8 has a predetermined thickness in the chain travel direction X. The peripheral portion of each link 2 shapes a smooth curve, which is deemed as a shape that hardly causes stress concentration.

First through third link units 51 through 53 are formed using the links 2. To be more predetermined, the first link unit 51, the second link unit 52, and the third link unit 53 each include plural links 2 aligned in the chain width direction W. In each of the first through third link units 51 through 53, the links 2 in the same link unit are aligned so that all are lined up at the same position in the chain travel direction X. The first through third link units 51 through 53 are disposed along the chain travel direction X.

The respective links 2 in the first through third link units 51 through 53 are coupled to the corresponding links 2 in the first through third link units 51 through 53 using the corresponding coupling members 50 in a bendable manner.
To be more concrete, the front through-hole 9 in the link 2 of the first link unit 51 and the rear through-hole 10 in the link 2 of the second link unit 52 are aligned in the chain width direction W and correspond to each other. The links 2 in the first and second link units 51 and 52 are coupled so as to be bendable with respect to each other in the chain travel direction X using the coupling member 50 that is inserted through these through-holes 9 and 10.

Likewise, the front through-hole 9 in the link 2 of the second link unit 52 and the rear through-hole 10 in the link 2 of the third link unit 53 are aligned in the chain width direction W and correspond to each other. The links 2 in the second and third link units 52 and 53 are coupled so as to be bendable with respect to each other in the chain travel direction X with the coupling member 50 that is inserted through these through-holes 9 and 10.
In FIG. 3, the first through third link units 51 through 53 are shown one for each. However, the first through third link units 51 through 53 are disposed repetitively along the chain travel direction X. The respective links 2 of two link units adjacent to each other in the chain travel direction X are successively coupled to each other with the corresponding coupling members 50 to form the endless chain 1.

Referring to FIG. 3 and FIG. 4, each coupling member 50 includes a first pin 3 as a first power transmission member and a second pin 4 as a second power transmission member, and these first and second pins 3 and 4 make a pair. The first pin 3 comes into rolling and sliding contact with respect to the second pin 4 disposed ahead in the chain travel direction X in association with bending between the links 2.

The term, "rolling and sliding contact", referred to herein means a contact state including at least one of rolling contact and sliding contact.
The first pin 3 is a plate-like member that extends long in the chain width direction W. A peripheral surface 11 of the first pin 3 extends in parallel with the chain width direction W.
The peripheral surface 11 is formed as a smooth surface and has a front portion 12 as an opposing portion facing frontward in the chain travel direction X, a rear portion 13 as a back portion facing rearward in the chain travel direction X, and one end portion 14 and the other end portion 15 as a pair of end portions mutually opposing in the orthogonal direction V.

Hereinafter, of the orthogonal direction V, a direction heading from the one end portion 14 to the other end portion 15 is referred to as the chain inside direction, and a direction heading from the other end portion 15 to the one end portion 14 is referred to as the chain outside direction.
The front portion 12 opposes the second pin 4 as a counterpart of the pair. The front portion 12 includes a main body portion 12a that comes into rolling and sliding contact with a rear portion 19 of the second pin 4 described below at a contact portion T (a contact point when viewed from the chain width direction W), and a contact-avoiding portion 12b positioned on the side opposite to the chain travel direction X with respect to the main body portion 12a.

The rear portion 13 includes a flat surface, and has a first angle of attack B1 (for example, 10°) with respect to a plane A orthogonal to the chain travel direction X (a plane orthogonal to the sheet surface of FIG. 4). The rear portion 13 is inclined at 10° with respect to the plane A in a counterclockwise direction in the drawing, and faces the chain inside direction.
The one end portion 14 forms the end portion of the peripheral surface 11 of the first pin 3 on the chain outside direction. The one end portion 14 is shaped in a curved surface that curves convexly to the chain outside direction and is formed as a curved surface portion. A generally intermediate portion of the one end portion 14 in the circumferential direction forms an apex portion 20 (apex line, and an apex point in FIG. 4) of the first pin 3 on the chain outside direction (with respect to the orthogonal direction V).

The other end portion 15 forms an end portion of the peripheral surface 11 of the first pin 3 on the chain inside direction. The other end portion 15 is shaped in a curved surface that convexly curves to the chain inside direction, and is formed as a curved surface portion. A generally intermediate portion of the other end portion 15 in the circumferential direction forms an apex portion 22 (apex line, and an apex point in FIG. 4) of the first pin 3 on the chain outside direction (with respect to the orthogonal direction V).
A pair of end portions 16 of the first pin 3 with respect to the longitudinal direction (chain width direction W) protrude respectively in the chain width direction W from the links 2 disposed at a pair of the end areas in the chain width direction W. A pair of end faces 17 as power transmission portions are respectively provided to the pair of end portions 16.

Referring to FIG. 2 and FIG. 5, the pair of end faces 17 mutually oppose to each other with a plane orthogonal to the chain width direction W in-between, and have a symmetrical shape. These end faces 17 are to come into frictional contact (engagement) with the corresponding sheave surfaces 62a and 63a or sheave surfaces 72a and 73a of the pulleys 60 and 70, respectively.
The first pin 3 is pinched between the corresponding sheave surfaces 62a and 63a or sheave surfaces 72a and 73a. Accordingly, power is transmitted between the first pin 3 and the pulley 60 or 70. Because the first pin 3 makes a direct contribution to power transmission at the end faces 17, it is made of a high-strength material with excellent wear resistance, for example, bearing steel (SUJ2 material).

Each end face 17 of the first pin 3 is made in a rounded shape. Each end face 17 is provided with a contact region 21. Of the end faces 17, the contact regions 21 are allowed to come into contact with the corresponding sheave surfaces 62a and 63a or sheave surfaces 72a and 73a of the pulleys 60 and 70, respectively.
The contact region 21 is, for example, of an elliptical shape, and has a contact center point C (equivalent to the center of figure of the contact region 21). When viewed from the chain width direction W, the contact center point C coincides with the center of figure of the end face 17. The position of the contact center point C, however, may be shifted (offset) from the center of figure of the end face 17.

When viewed along the chain width direction W, a major axis D of the contact region 21 has a second angle of attack B2. The second angle of attack B2 is an angle with respect to the plane A orthogonal to the chain travel direction X. It is set, for example, in a range of 5 to 12° (10° in this embodiment). The major axis D travels in the chain travel direction X as headed from the outside of the chain 1 to the inside of the chain 1 in the chain travel direction X.

The first and second angles of attack B1 and B2 may be made equal to each other or different from each other. In this embodiment, the first and second angles of attack B1 and B2 are equal to each other.
Referring to FIG. 3 and FIG. 4, the second pin 4 (called also as a strip or an interpiece) is a plate-like member made of the same material as the first pin 3 and extending long in the chain width direction W.

The second pin 4 is made shorter than the first pin 3 in the chain width direction W to prevent a pair of end portions thereof in the longitudinal direction (chain width direction W) from coming into contact with the sheave surfaces of the pulleys. The second pin 4 is disposed ahead in the chain travel direction X with respect to the first pin 3 which is the counterpart of the pair. The second pin 4 is made thinner than the first pin 3 with respect to the chain travel direction X. A peripheral surface 18 of the second pin 4 extends in the chain width direction W and is formed as a smooth surface.

The chain 1 is a so-called press-fit type chain. To be more concrete, the first pin 3 is loose-fit in the front through-holes 9 in the respective links 2 so as to allow relative movements, whereas they are press-fit in the rear through-holes 10 in the respective plate links 2 so as to inhibit relative movements. Also, the second pin 4 is press-fit in the front through-holes 9 in the respective links 2 so as to inhibit relative movements, whereas they are loose-fit in the rear through-holes 10 in the respective links 2 so as allow relative movements.

In other words, the first pin 3 is loose-fit in the front through-holes 9 in the respective links 2, whereas the second pin 4 making a pair with the first pin 3 is press-fit therein. Also, the first pin 3 is press-fit in the rear through-holes 10 in the respective plate links 2, whereas the second pin 4 making a pair with the first pin 3 is loose-fit therein.
According to the configuration as described above, the main body portion 12a of the front portion 12 of the first pin 3 and the rear portion 19 of the second pin 4 as the counterpart of the pair come into rolling and sliding contact with each other on the contact portion T in association with the bending between the respective links 2 adjacent to each other in the chain travel direction X (bending of the chain 1). The contact portion T undergoes displacement along predetermined movement locus.

The first pin 3 is inserted through the through-holes 9 or 10 in the respective links 2 on the rear side in the chain travel direction X. The second pin 4 is inserted through the through-holes 9 or 10 in the respective links 2 on the front side in the chain travel direction X.
The predetermined movement locus of the contact portion T in reference to the first pin 3 generally shapes an involute curved surface. To be more concrete, the sectional shape of the main body portion 12a of the front portion 12 of the first pin 3 is in the form of an involute curve. The curvature radius of the involute curve becomes larger as headed to the chain outside direction in case where the start point is a contact portion T1 which is the contact portion T in the straight region.

Alternatively, the predetermined movement locus may be made into a curve other than the involute curve by making the sectional shape of the main body portion 12a of the front portion 12 of the first pin 3 into a curve other than the involute curve. Examples of the curve in this case include a curve having one or more curvature radius.
The chain 1 has a predetermined alignment pitch P. The alignment pitch P is defined as a pitch between the first pins 3 adjacent to each other with respect to the chain travel direction X in the straight region of the chain 1. To be more concrete, it is a distance in the chain travel direction X between the contact portion T1 of the first and second pins 3 and 4 inside the front through-hole 9 in the link 2 and the contact portion T1 of the first and second pins 3 and 4 inside the rear through-hole 10 in the same link 2 in the straight region. In this embodiment, the alignment pitch P is set, for example, to 8 mm.

One of the characteristics of this embodiment is that the one end portion 14 and the other end portion 15 of the first pin 3 each include a portion whose curvature radius is increased step by step as headed to the corresponding apex portion 20 or 22.

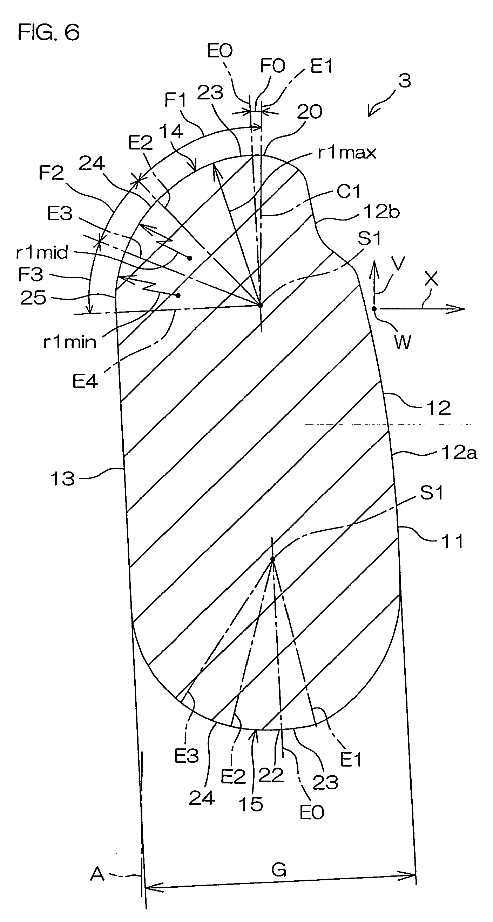

FIG. 6 is an enlarged section of the first pin 3. Referring to FIG. 6, the one end portion 14 of the first pin 3 includes a first portion 23 including the apex portion 20 described above, a second portion 24 disposed adjacently to the first portion 23 behind the first portion 23 in the chain travel direction X, and a third portion 25 disposed adjacently to the second portion 24 behind the second portion 24 in the chain travel direction X and continuing to the rear portion 13.

The first portion 23 is a portion that has a curvature radius r1max which is the largest in the one end portion 14. The curvature radius r1max is preferably set to a range of 20% to 25% of the alignment pitch P (see FIG. 4).
Referring to FIG. 6 again, the first portion 23 is defined between first and second planes E1 and E2. Each of the first and second planes E1 and E2 is a plane including an axis S1 passing through the curvature center line of the curvature radius r1max (first portion 23) and extending in the longitudinal direction of the first pin 3. In FIG. 6, the axis S1 is an axis extending perpendicularly to the sheet surface.

The first plane E1 has a predetermined angle F0 with respect to a reference plane E0. The reference plane E0 is a plane including the apex portion 20 of the first pin 3 and in parallel with the rear portion 13. The reference plane E0 can also be said as a plane including the axis S1 and in parallel with the rear portion 13.
A first plane E1 has an angle F0 (referred to also as the contained angle, including 0°) of 0° to 10° with respect to the reference plane E0 and thereby inclines to the chain travel direction X side (clockwise direction in the drawing). Accordingly, the first portion 23 includes a portion positioned ahead in the chain travel direction X with respect to the reference plane E0. In this embodiment, the angle F0 is set, for example, to 5°.

The second plane E2 has an angle F1 (contained angle) of not less than 30° with respect to the first plane E1 and thereby inclines to the side opposite to the chain travel direction X (counterclockwise direction in the drawing). In this embodiment, the angle F1 is set, for example, to 30°.
A part of the first portion 23 positioned behind in the chain travel direction X with respect to the apex portion 20 is wider than a part positioned ahead in the chain travel direction X with respect to the apex portion 20.

The curvature radius r1max of the first portion 23 is set to a range of 55 to 150% of a plate thickness G of the first pin 3 (0.55G≤r1max≤1.5G). The term, "the plate thickness G of the first pin 3", referred to herein means the thickness of the first pin 3 with respect to a direction orthogonal to the rear portion 13. The thickness G is set, for example, to 2.7 mm, where r1max is set to a range of 1.485 mm to 4.05 mm (1.485≤r1max≤4.05). Within this range, the curvature radius r1max of the first portion 23 is set, for example, to 1.6 mm.

In addition, the curvature radius r1max of the first portion 23 is set, for example, to not less than 125% of the curvature radius r1min of the third portion 25 (r1max≥1.25r1min) which is the smallest curvature radius in the one end portion 14 of the first pin 3. In this embodiment, the proportion of r1max with respect to r1min is set, for example, to 130%. The curvature radius r1max of the first portion 23 is set, for example, to 1.6 mm and the curvature radius r1min of the third portion 25 is set, for example, to 1.23 mm.

The second portion 24 continues to the first portion 23 at one end in the circumferential direction and continues to the third portion 25 at the other end. The second portion 24 is defined between the second and third planes E2 and E3. The third plane E3 is a plane including the axis S1. The third plane E3 has an angle F2 of, for example, not more than 30° with respect to the second plane E2 and thereby inclines to the side opposite to the chain travel direction X.

A curvature radius r1mid of the second portion 24 is set to a value that is large next to the value of the curvature radius r1max, and is set, for example, to 1. 4 mm. The curvature radius r1mid is set smaller than the curvature radius r1max of the first portion 23 (r1mid < r1max). It is preferable that the curvature radius r1mid is set to 55% to 80% of the curvature radius r1max of the first portion 23.

The third portion 25 is formed as a portion having the smallest curvature radius in the one end portion 14. The third portion 25 continues to the second portion 24 at one end in the circumferential direction and continues to the rear portion 13 at the other end. The third portion 25 is defined between the third and fourth planes E3 and E4. The fourth plane E4 is a plane including the axis S1. The fourth plane E4 has an angle F3 of, for example, not more than 25° with respect to the third plane E3 and thereby inclines to the side opposite to the chain travel direction X.

The curvature radius r1min of the third portion 25 is set to a value that is large next to the value of the curvature radius r1mid, and as has been described above, it is set, for example, to 1.23 mm. The curvature radius r1min is smaller than both the curvature radius r1max of the first portion 23 and the curvature radius r1mid of the second portion 24 (rlmin<rlmid<rlmax). It is preferable that the curvature radius r1min is set to 20 to 45% of the curvature radius r1max.

As with the one end portion 14, the other end portion 15 of the first pin 3 has the first portion 23 and the second portion 24. The first portion 23 of the other end portion 15 includes the apex portion 22.

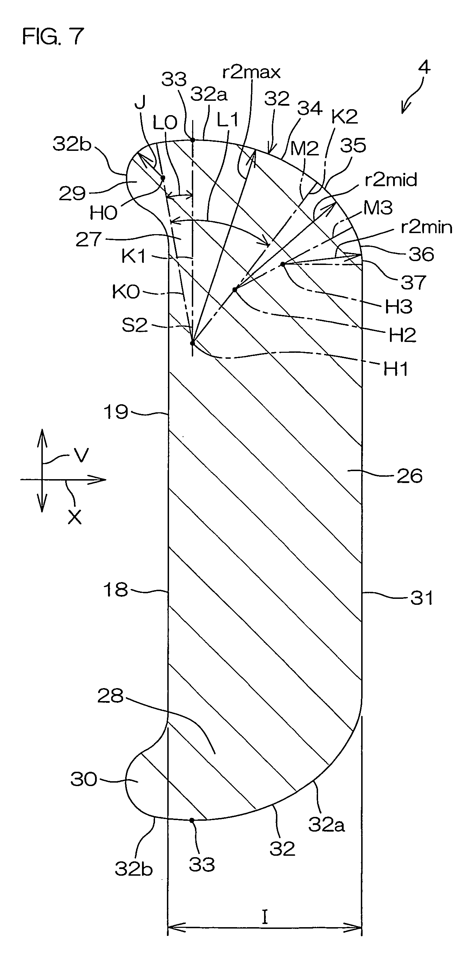

FIG. 7 is an enlarged section of the second pin 4. Referring to FIG. 7, the second pin 4 is of a shape having a recessed part on the rear side with respect to the chain travel direction X in the center portion in the orthogonal direction V. The height of the second pin 4 with respect to the orthogonal direction V is set, for example, to 6 mm.

The second pin 4 includes a plate-like main body portion 26, a pair of end portions 27 and 28 with respect to the orthogonal direction V, and a pair of rib portions 29 and 30 provided to a pair of the end portions 27 and 28 respectively.
The main body portion 26 of the second pin 4 is formed to have an elongate sectional shape in the orthogonal direction V. A plate thickness I of the main body portion 26 (thickness in the chain travel direction X) is set, for example, to 1.7 mm.
The main body portion 26 has a rear portion 19 as an opposing portion facing rearward in the chain travel direction X and opposing the front portion 12 of the first pin 3, and a front portion 31 facing frontward in the chain travel direction X. The rear portion 19 is formed as a flat surface orthogonal to the chain travel direction X. The front portion 31 is formed as a flat surface generally in parallel with the rear portion 19.

The rib portions 29 and 30 extend, respectively, from the end portions 27 and 28 of the second pin 4 in a direction opposite to the chain travel direction X. The one end portion 27 together with the one rib portion 29 and the other end portion 28 together with the other rib portion 30 are disposed symmetrically with respect to the orthogonal direction V and have the same configuration. Hereinafter, the one end portion 27 and the one rib portion 29 will be described chiefly.

The outer peripheral surfaces of the one end portion 27 and the one rib portion 29 are formed as a curved surface portion 32 in a curved shape. A curved surface portion 32b in the rib portion 29 is connected to the rear portion 19 at one end in the circumferential direction. When viewed from the chain width direction W, the curved surface portion 32b is shaped like a circular arc having a center H0 and a curvature radius J. The center H0 is disposed at a position offset rearward in the chain travel direction X with respect to the rear portion 19 of the main body portion 26. The curvature radius J is set, for example, to about 0.3 mm.

The center H0 may be disposed to be aligned with the rear portion 19 on a straight line, or it may be disposed at a position offset frontward in the chain travel direction X with respect to the rear portion 19.
A curved surface portion 32a of the one end portion 27 is connected to the other end of the curved surface 32b at one end in the circumferential direction and connected to the front portion 31 of the main body portion 26 at the other end portion in the circumferential direction.
One of the characteristics of this embodiment is that the curved surface 32a includes a part whose curvature radius is increased step by step as headed toward an apex portion 33 described below.

To be more concrete, the curved surface portion 32a includes a first portion 34 including the apex portion 33 (apex line, and apex point in the drawing) in the one end portion 27 of the second pin 4 (with respect to the orthogonal direction V), a second portion 35, and a third portion 36. These first through third portions 34 through 36 are aligned along the chain travel direction X and each is of a circular arc shape.
Curvature radii r2max, r2mid, and r2min of the first portion 34, the second portion 35, and the third portion 36, respectively, are made smaller sequentially step by step. In other words, from the third portion 36 to the first portion 34, the respective curvature radii r2min, r2mid, and r2max are increased sequentially step by step.

The first portion 34 is formed as a portion having the largest curvature radius in the curved surface portion 32a, and has a center H1 and the curvature radius r2max. The center H1 is disposed between the rear portion 19 and the front portion 31 of the main body portion 26 with respect to the chain travel direction X.
The first portion 34 is defined between first and second planes K1 and K2. Each of the first and second planes K1 and K2 includes an axis S2 passing through the curvature center line of the curvature radius r2max (first portion 34) and extending in the longitudinal direction of the second pin 4 (in FIG. 7, an axis extending perpendicularly to the sheet surface).

The first plane K1 has a predetermined angle L0 with respect to the reference plane K0. The reference plane K0 is a plane including the apex portion 33 of the second pin 4 and in parallel with the rear portion 19. The reference plane K0 can also be said as a plane including the axis S2 and in parallel with the rear portion 19.
The first plane K1 has the angle L0(also referred to as the contained angle, including 0°) of 0° to 10° with respect to the reference plane K0 and thereby inclines to the side opposite to the chain travel direction X (counterclockwise direction in the drawing). In this embodiment, the angle L0 is set, for example, to 5°. The first portion 34 includes a part positioned rearward in the chain travel direction X with respect to the reference plane K0.

The second plane K2 has an angle L1 (contained angle) of not less than 30° with respect to the first plane K1 and thereby inclines to the chain travel direction X side (clockwise direction in the drawing). In this embodiment, the angle L1 is set, for example, to 30°.
Referring to FIG. 4 and FIG. 7, the curvature radius r2max is set to a range of 20% to 25% of the alignment pitch P (in this embodiment, 1.6 mm to 2.0 mm).

By setting the curvature radius r2max to not less than 20% of the alignment pitch P, the first portion 34 can be made sufficiently flat, which makes it possible to prevent the occurrence of stress concentration at the peripheral portion of the front through-hole 9 in the link 2. Also, by setting the curvature radius r2max to not more than 25% of the alignment pitch P, it is possible to prevent the curvature radius from varying abruptly in the vicinity of a bottom portion 37 of the curved surface portion 32a. It is thus possible to prevent the occurrence of stress concentration at the peripheral portion of the front through-hole 9 in the link 2. In this embodiment, the curvature radius r2max is set, for example, to 1.8 mm.

Referring to FIG. 7, it is preferable that the curvature radius r2max is set to 55% to 150% of the plate thickness I of the second pin 4 (thickness of the main body portion 26). Also, it is preferable that the curvature radius r2max is set to not less than 125% of the curvature radius r2min of the third portion 36.
The second portion 35 is a portion having a curvature radius that is large next to the curvature radius of the first portion 34 in the curved surface portion 32a, and has a center H2 and the curvature radius r2mid. The center H2 is disposed on a straight line M2 linking one end of the first portion 34 in the circumferential direction and the center H1 of the first portion 34.

The curvature radius r2mid is set to a range of 55% to 80% of the curvature radius r2max (in this embodiment, about 1.0 mm to 1.6 mm).
By setting the curvature radius r2mid to not less than 55% of the curvature radius r2max, the second portion 35 can be made sufficiently flat, which makes it possible to prevent the occurrence of stress concentration at the peripheral portion of the front through-hole 9 in the link 2. Also, by setting the curvature radius r2mid to not more than 80% of the curvature radius r2max, it is possible to prevent the curvature radius from varying abruptly in the vicinity of the bottom portion 37 of the curved surface portion 32a. It is thus possible to prevent the occurrence of stress concentration at the peripheral portion of the front through-hole 9 in the link 2. In this embodiment, the curvature radius r2mid is set, for example, to 1.2 mm.

The third portion 36 is formed as a portion having a curvature radius that is large next to the curvature radius of the second portion 35 (portion having the smallest curvature radius) in the curved surface portion 32a, and has a center H3 and the curvature radius r2min. The center H3 is disposed on a straight line M3 linking the one end of the second portion 35 in the circumferential direction and the center H2 of the second portion 35.
The curvature radius r2min is set to a range of 20% to 45% of the curvature radius r2max (in this embodiment, about 0.3 mm to 0.9 mm).

By setting the curvature radius r2min to not less than 20% of the curvature radius r2max, the third portion 36 can be made sufficiently flat, which makes it possible to prevent the occurrence of stress concentration at the peripheral portion of the front through-hole 9 in the link 2. Also, by setting the curvature radius r2min to not more than 45% of the curvature radius r2max, it is possible to prevent the curvature radius from varying abruptly in the vicinity of the bottom portion 37 of the curved surface portion 32a. It is thus possible to prevent the occurrence of stress concentration at the peripheral portion of the front through-hole 9 in the link 2.

By providing the third portion 36, it is possible to secure a large area for the front portion 31 of the main body portion 26 of the second pin 4, which can consequently make an allowable bending angle of the chain 1 larger. Hence, providing the third portion 36 to the curved surface portion 32 is of great significance. In this embodiment, the curvature radius r2min is set, for example, to 0.6 mm.
Referring to FIG. 4, the front through-hole 9 in the link 2 is provided with a pair of receiving portions 38 and 39 that receive the second pin 4 press-fit therein. The pair of receiving portions 38 and 39 are provided on the front end of the front through-hole 9 with respect to the chain travel direction X and mutually oppose in the orthogonal direction V with the second pin 4 in-between. The receiving portions 38 and 39 receive the corresponding curved surface portions 32a of the second pin 4 as well as the corresponding curved surface portions 32b at least in part. The receiving portions 38 and 39 are pressed against these curved surfaces 32a and 32b.

A pushing force to the chain outside direction is applied to the one receiving portion 38 by the second pin 4. Also, a pushing force to the chain inside direction is applied to the other receiving portion 39 by the second pin 4.
The rear through-hole 10 in the link 2 is provided with a pair of receiving portions 40 and 41 that receive the first pin 3 press-fit therein. The pair of receiving portions 40 and 41 are provided on the rear end of the rear through-hole 10 with respect to the chain travel direction X and mutually oppose in the orthogonal direction V with the first pin 3 in-between. The receiving portions 40 and 41 respectively receive the one end portion 14 and the other end portion 15 of the first pin 3. The receiving portions 40 and 41 are respectively pressed against the one end portion 14 and the other end portion 15 of the first pin 3.

A pushing force to the chain outside direction is applied to the one receiving portion 40 by the first pin 3. Also, a pushing force to the chain inside direction is applied to the other receiving portion 41 by the first pin 3.
The first and second pins 3 and 4 press-fit in the corresponding link 2 sandwich the other first and second pins 3 and 4 loosely-fit in this link 2 in the chain travel direction X.

The contact-avoiding portion 12b of the first pin 3 is to avoid contact with the one rib portion 29 of the second pin 4 on the outside in chain diamiter direction. When viewed in the chain width direction W, the contact-avoiding portion 12b is provided between the one end portion 14 and the main body portion 12a in the peripheral surface 11 of the first pin 3. The contact-avoiding portion 12b includes a concave portion recessed with respect to the main body portion 12a. Consequently, as is shown in FIG. 5, the one rib portion 29 will not come into contact with the first pin 3 even when the chain 1 is bending.

Referring to FIG. 4, the pillar portion 8 of the link 2 prevents the bending angle of the chain 1 from exceeding a predetermined range. To be more concrete, the pillar portion 8 of the link 2 includes a pair of side portions 42 and 43 mutually opposing in the chain travel direction X. The other side portion 43 forms a part of the periphery of the rear through-hole 10 and is in the form of a mountain that protrudes rearward in the chain travel direction X.
The other side portion 43 has a pair of inclined surfaces 44 and 45 extending so as to cross each other. The pair of inclined surfaces 44 and 45 opposes the front portion 31 of the second pin 4 while being spaced part slightly (for example, with a clearance of the order of several tens of micrometers).

As has been described, according to this embodiment, it is possible to achieve the functions and effects as follows. That is, the curvature radii of the one end portion 14 and the other end portion 15 of the first pin 3 and the curved surface portion 32a of the one end portion 27 and the curved surface portion 32a of the other end portion 28 of the second pin 4 are increased as headed for the corresponding apex portions 20, 22, 33, and 33. Accordingly, the apex portions 20, 22, 33, and 33 can be made into a flatter shape.

Consequently, when the receiving portions 38, 39 40, and 41 of the link 2 receive load, respectively, from the one end portion 14 and the other end portion 15 of the first pin 3 and the curved surface portion 32a of the one end portion 27 and the curved surface portion 32a of the other end portion 28 of the second pin 4, it is possible to suppress the occurrence of stress concentration at the peripheral portions of the respective through-holes 9 and 10 in the link 2. Consequently, the durability of the link 2 can be enhanced by suppressing fatigue thereof, which makes it possible to enhance the durability of the chain 1 markedly.

Because stress induced on the link 2 due to press-fit of the corresponding first and second pins 3 and 4 is reduced, it is possible to make the first and second pins 3 and 4 thinner with respect to the chain travel direction X. Hence, by making the respective through-holes 9 and 10 smaller in shape, it is possible to shorten the distance between the pair of side portions 42 and 43 of the pillar portion 8.
Consequently, many more first pins 3 can be meshed with the respective pulleys 60 and 70 at a time. It is thus possible to further enhance allowable transmission torque of the chain 1. Moreover, it is possible to further enhance the durability by reducing load per first pin 3.

Also, by setting the curvature radii r1max and r2max of the first portions 23 and 34 of the first and second pins 3 and 4, respectively, to not less than 55% of the plate thicknesses G and I of the corresponding first and second pins 3 and 4, respectively, the first portions 23 and 34 can be made sufficiently flat. It is therefore possible to reduce stress induced on the link 2 due to press-fit of the first and second pins 3 and 4 in a reliable manner.
In addition, by setting the curvature radii r1max and r2max of the first portions 23 and 34, respectively, to not more than 150% of the corresponding plate thicknesses G and I of the first and second pins 3 and 4, respectively, it is possible to prevent amounts of variance of the curvature radii in the first portions 23 and 34 from becoming excessively large. Consequently, load to be applied on the peripheral portions of the respective through-holes 9 and 10 in the link 2 can be made more uniform.

Further, because the curvature radii r1max and r2max of the first portions 23 and 34, respectively, are set to not less than 125% of the curvature radii r1min and r2min of the corresponding third portions 25 and 36, respectively, it is possible to reduce stress induced on the link 2 due to press-fit of the first and second pins 3 and 4 in a more reliable manner by making the first portions 23 and 34 of the first and second pins 3 and 4, respectively, sufficiently flat.

Also, by providing the first and second angles of attack B1 and B2 to the first pin 3, it is possible to dispose the first pin 3 most suitably to be meshed with the pulleys 60 and 70 more smoothly.
Further, by defining the first portions 23 in the one end portion 14 and in the other end portion 15 of the first pin 3 by the first and second planes E1 and E2 that have the contained angles of not less than 30°, it is possible to achieve the effect of reducing stress induced on the link 2 in a reliable manner by securing the first portions 23 sufficiently.

Also, by defining the first portions 34 in the one end portion 27 and in the other end portion 28 of the second pin 4 by the first and second planes K1 and K2 that have the contained angle of not less than 30°, it is possible to achieve the effect of reducing stress induced on the link 2 in a reliable manner by securing the first portions 34 sufficiently.
In addition, by providing the pair of rib portions 29 and 30 to the second pin 4, the rib portions 29 and 30 are received, respectively, by the pair of receiving portions 38 and 39 of the link 2.

Accordingly, it is possible to secure a large contact area of the receiving portions 38 and 39 of the front through-hole 9 in the link 2 with the second pin 4.
Consequently, the durability of the link 2 can be enhanced by sufficiently lowering the plane pressure applied on the link 2 from the second pin 4. It is therefore possible to secure the practical durability of the chain 1 sufficiently.
In addition, the main portion 26 of the second pin 4 can be made thinner with respect to the chain travel direction X while securing the practically sufficient durability, which can in turn reduce the second pin 4 in size. Consequently, because the alignment pitch P of the links 2 can be made shorter, it is possible to suppress chordal actions resulting from the meshing of the first pins 3 with the pulleys 60 and 70, which can consequently reduce noises.

Also, the apex portion 33 of the curved surface portion 32a can be made as flat as possible owing to a synergistic effect of providing the rib portions 29 and 30 in an extending manner and increasing the curvature radius of the curved surface 32a from the bottom portion 37 toward the apex portion 33. It is thus possible to make the opposing portions of the curved surface portions 32 of the second pin 4 and the corresponding receiving portions 38 and 39 into a flatter shape.
It is thus possible to prevent the occurrence of stress concentration at the respective receiving portions 38 and 39 of the link 2 in a more reliable manner. Consequently, the durability of the link 2 can be enhanced, which can in turn further enhance the practical durability of the chain 1. In addition, the alignment pitch P of the links 2 can be made shorter by making the main body portion 26 of the second pin 4 thinner in the chain travel direction X.

By setting the curvature radii r2max of the first portions 34 of the curved surface portions 32a of the second pin 4 to not less than 20% of the alignment pitch P, the first portions 34 can be made sufficiently flat. It is thus possible to prevent the occurrence of stress concentration at the corresponding receiving portions 38 and 39 of the link 2. Also, by setting the curvature radius r2max of the first portions 34 to not more than 25% of the alignment pitch P, it is possible to prevent the curvature radius from varying abruptly in the vicinity of the bottom portions 37 of the curved surface portions 32a. It is thus possible to prevent the occurrence of stress concentration at the corresponding receiving portions 38 and 39 of the link 2.

Further, by setting the curvature radius r2mid of the second portions 35 of the second pin 4 to not less than 55% of the curvature radius r2max, the second portion 35 can be made sufficiently flat. It is thus possible to prevent the occurrence of stress concentration at the corresponding receiving portions 38 and 39 of the link 2. Also, by setting the curvature radius r2mid to not more than 80% of the curvature radius r2max, it is possible to prevent the curvature radius from varying abruptly in the vicinity of the bottom portions 37 of the curved surface portions 32a. It is thus possible to prevent the occurrence of stress concentration at the corresponding receiving portions 38 and 39 of the link 2.

Also, by setting the curvature radius r2min of the third portions 36 of the second pin 4 to not less than 20% of the curvature radius r2max, the third portions 36 can be made sufficiently flat. It is thus possible to prevent the occurrence of stress concentration at the corresponding receiving portions 38 and 39 of the link 2. Also, by setting the curvature radius r2min to not more than 45% of the curvature radius r2max, it is possible to prevent the curvature radius from varying abruptly in the vicinity of the bottom portions 37 of the curved surface portions 32a. It is thus possible to prevent the occurrence of stress concentration at the corresponding receiving portions 38 and 39 of the link 2.

Further, by providing the third portions 36, it is possible to secure a large area for the front portion 31 of the main body portion 26 of the second pin 4, which can consequently make the allowable bending angle of the chain 1 larger. Hence, providing the third portion 36 in the curved surface portion 32 is of great significance.
Further, by providing the contact-avoiding portion 12b to the first pin 3, it is possible to avoid the contact between the first pin 3 and the second pin 4, which can consequently prevent interference of the bending between the respective links 2.

In addition, the pair of inclined surfaces 44 and 45 is provided to the other side portion 43 of the pillar portion 8. Accordingly, by allowing the pair of inclined surfaces 44 and 45 to abut on the corresponding second pin 4, it is possible to restrict the angle range of relative rotation between the links 2 adjacent to each other in the chain travel direction X. Hence, not only is it possible to achieve smooth bending of the chain 1, but it is also possible to suppress chordal actions while the chain 1 is driven. It is therefore possible to achieve a reduction of noises, enhancement of the transmission efficiency, and a reduction of load applied on the chain 1.

Further, the first pin 3 is loose-fit in the front through-holes 9 in the respective links 2 and the second pin 4 is press-fit therein, while the first pin 3 is press-fit in the rear through-holes 10 in the respective links 2 and the second pin 4 is loose-fit therein. Accordingly, when the end faces 17 of the first pin 3 come into contact with the corresponding sheave surfaces 62a and 63 or sheave surfaces 72a and 73a of the pulley 60 or 70, respectively, the second pin 4 as the counterpart in a pair undergoes relative movement by coming into rolling and sliding contact with the first pin 3, which allows the respective links 2 to bend with respect to each other.

In this instance, the sliding contact components can be lessened by increasing the mutual rolling contact components between the first and second pins 3 and 4.
Consequently, the end faces 17 of the first pin 3 are allowed to come into contact with the corresponding sheave surfaces 62a and 63a or sheave surfaces 72a and 73a while they hardly rotate. It is thus possible to ensure higher transmission efficiency by reducing a frictional loss.
Further, when viewed from the chain width direction W, movement locus of the contact portion T in reference to the first pin 3 draw an involute curve. It is thus possible to suppress the occurrence of chordal actions in the chain 1 when the first pins 3 are successively meshed with the pulleys 60 and 70. Consequently, noises while the chain 1 is driven can be reduced further.

In this manner, it is possible to achieve the continuously variable transmission 100 that is compact and excellent in silence, transmission efficiency, and durability while being capable of suppressing vibrations.
In this embodiment, the curvature radius of at least one of the one end portion 14 and the other end portion 15 of the first pin 3 and the curved surface portion 32a of the one end portion 27 and the curved surface 32a of the other end portion 28 of the second pin 4 may be increased continuously.

Also, the curvature radii of the curved surface portions 32b of the rib portions 29 and 30 of the second pin 4 may be increased continuously as headed from the bottom portion to the apex portions 33.
Also, the second pin 4 may be shaped asymmetrical with respect to the orthogonal direction V. Further, it may be configured in such a manner that each curved surface portion 32a is formed of the first and second portions 34 and 35 alone by omitting the third portion 36 of the curved surface portion 32a.

Further, the angles F0 through F3 in the first pin 3 may be larger or smaller than the values shown above. The upper limit of the angle F1 may be, for example, 40º, 50Q, 60Q, or larger.
Further, the proportion of the curvature radius r1max of the first portion 23 of the first pin 3 with respect to the plate thickness G of the first pin 3 may be larger or smaller than the value shown above. The proportion of the curvature radius r1max of the first portion 23 of the first pin 3 with respect to the curvature radius r1min of the third portion 25 may be smaller than the value shown above.

Further, many more portions having different curvature radii may be provided to each of the one end portion 14 and the other end portion 15 of the first pin 3 and the curved surface portion 32a of the one end portion 27 and the curved surface portions 32a of the other end portion 28 of the second pin 4 so as to make the surface smoother.
Further, the other end portion 15 of the first pin 3 may be of the same shape as that of the one end portion 14, or the curved surface portion may be provided to either one of the one end portion 14 and the other end portion 15. Further, the curved surface portion may be provided to either one of the one end portion 27 and the other end portion 28 of the second pin 4.

Further, the first pin 3 may be loose-fit in the corresponding rear through-holes 10 in the respective links 2. Further, the second pin 4 may be loose-fit in the corresponding front through-holes 9 in the respective links 2. Furthermore, the second pin 4 may be meshed with the pulleys 60 and 70.
In addition, the invention may be applied to a so-called block-type power transmission chain in which members having power transmission portions same as the end faces of the first pins are provided in the vicinity of a pair of the end portions of the first pin in the longitudinal direction, respectively.

Further, the locations of the front through-hole 9 and the rear through-hole 10 in the link 2 may be changed with each other. Furthermore, a connecting groove (slit) may be provided to the pillar portion 8 of the link 2 to connect the front through hole 9 and the rear through hole 10. In this case, an amount of elastic deformation (flexibility) of the link 2 can be adjusted with the height of the slit.
It should be noted that the invention is not limited to the configuration in which the groove widths of the both drive pulley 60 and the driven pulley 70 are variable, and it may configured in such a manner that the groove width of either one of the pulleys is variable whereas the groove width of the other is fixed. Further, the embodiment in which the groove widths vary continuously (in a stepless manner) is described above. However, the invention may be applied to other power transmission devices in which the groove widths are varied step by step or fixed (invariable).

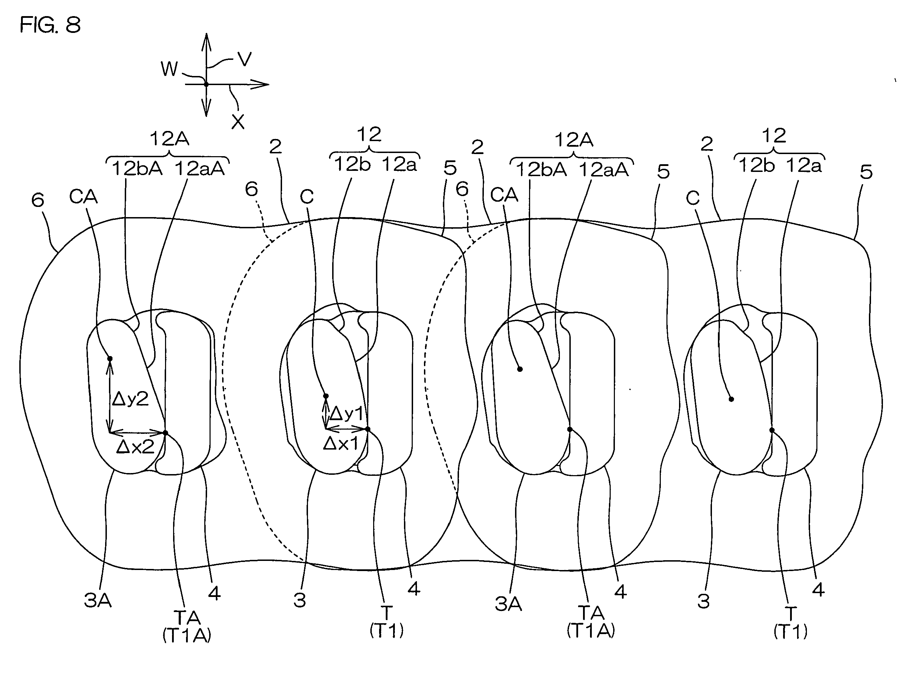

FIG. 8 is a side view of a major portion according to another embodiment of the invention. Hereinafter, differences from the embodiment shown in FIG. 1 through FIG. 7 will be chiefly described. Like components are labeled with like reference numerals and descriptions thereof are omitted herein.
Referring to FIG. 8, this embodiment is characterized in that plural types of first pins are provided and the shape of the contact-avoiding portion differs from one type of the first pins to another.

First pins 3 and 3A are provided as plural types of the first pins 3. One of the characteristics of this embodiment is that the contact cycles in which the first pins 3 and 3A successively come into contact with the sheave surfaces of the respective pulleys are randomized.
To be more concrete, the loci (predetermined movement loci) of the rolling and sliding contact of the first pins 3 and 3A at the contact portions T and TA, respectively, are made different from each other, and when viewed from the chain width direction W, the relative positions of the contact portion T1 and the contact center point C of the first pin 3 and the relative positions of the contact portion T1A and the contact center point CA of the first pin 3A are different from each other.

As a configuration that provides different loci to the rolling and sliding contact of the first pins 3 and 3A at the contact portions T and TA, respectively, the sectional shape of the main body portion 12aA of the front portion 12A of the first pin 3A is made different from the sectional shape of the main body portion 12a of the front portion 12 of the first pin 3. The base circle radius of the involute curve of the section of the main body portion 12aA of the front portion 12A is made smaller than the base circle radius of the involute curve of the section of the main body portion 12a of the front portion 12.

The contact-avoiding portion 12bA of the first pin 3A is shaped in the form of a curved surface that smoothly continues to the main body portion 12aA. By making the base circle radius of the involute curve of the main body portion 12aA smaller, the end portion of the main body portion 12aA on the outside in chain diameter direction is positioned well behind the second pin 4 in the chain travel direction X. It is thus possible to avoid the contact with the one rib portion 29 of the second pin 4 without the need to make the contact-avoiding portion 12bA in a recessed shaped.

A configuration to make the relative positions of the first contact portion T1 and the contact center point C of the first pin 3 and the relative positions of the contact portion T1A and the contact center point CA of the first pin 3A different from each other when viewed in the chain width direction W is as follows.
That is, when viewed in the chain width direction W, the relative positions of the contact portion T1 and the contact center point C of the first pin 3 in the straight region are spaced apart by Δx1 with respect to the chain travel direction X and by Δy1 with respect to the orthogonal direction V.
Meanwhile, when viewed in the chain width direction W, the relative positions of the contact portion T1A and the contact center point CA of the first pin 3A in the straight region are spaced apart by Δx2 with respect to the chain travel direction X and by Δy2 with respect to the orthogonal direction V.

When viewed in the chain width direction W, the relative positions of the contact portion T1 and the contact center point C of the first pin 3 and the relative positions of the contact portion T1A and the contact center point CA of the first pin 3A are different at least in one of the chain travel direction X and the orthogonal direction V (in this embodiment, in the both directions) (Δx1≠Δx2 and Δy1≠Δy2).
The first pins 3 and the first pins 3A are aligned randomly in the chain travel direction X. In this case, the phase, "aligned randomly", means that at least either the first pins 3 or the first pins 3A are disposed on an irregular basis in the chain travel direction X at least in part. The phrase, "on an irregular basis", means that at least one of the periodicity and the regularity is absent.

According to this embodiment, by providing different shapes to the contact-avoiding portions 12b and 12bA of the first pins 3 and 3A, respectively, it is possible to discriminate between the first pins 3 and 3A with ease, which makes it possible to prevent the occurrence of an error when assembling the first pins 3 and 3A.
Also, the occurrence cycles of meshing sounds produced when the first pins 3 and 3A are successively meshed with the pulleys are randomized to distribute the frequencies of the meshing sounds in a broader range. It is thus possible to further reduce the noises during the driving.

In this embodiment, as a configuration to randomize the occurrence cycles of the meshing sounds produced when the first pins 3 and 3A are successively meshed with the respective pulleys, only the movement loci of the rolling and sliding contact of the first pins 3 and 3A at the contact portions T and TA, respectively, may be made different from each other.
Also, as a configuration to randomize the occurrence cycles of the meshing sounds produced when the first pins 3 and 3A are successively meshed with the respective pulleys, only the relative positions of the contact portion T1 and the contact center point C of the first pin 3 and the relative positions of the contact portion T1A and the contact center point CA of the first pin 3A may be made different from each other when viewed from the chain width direction.

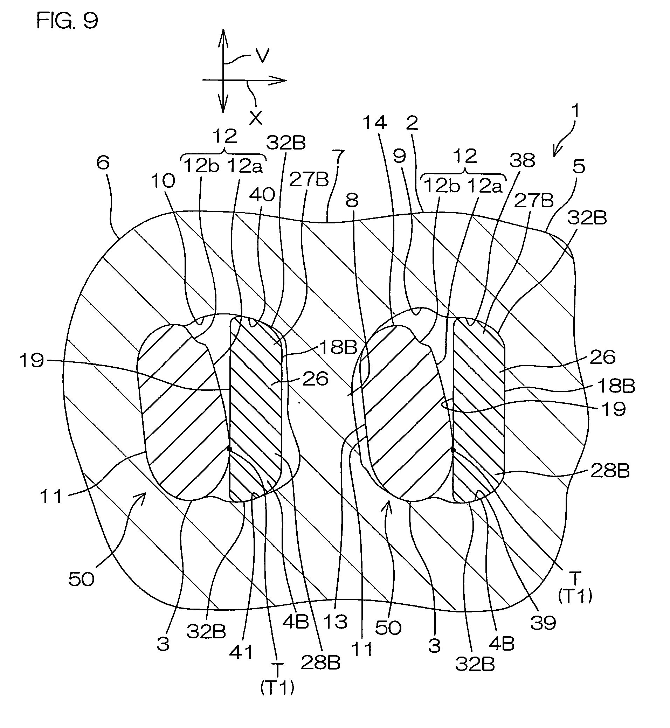

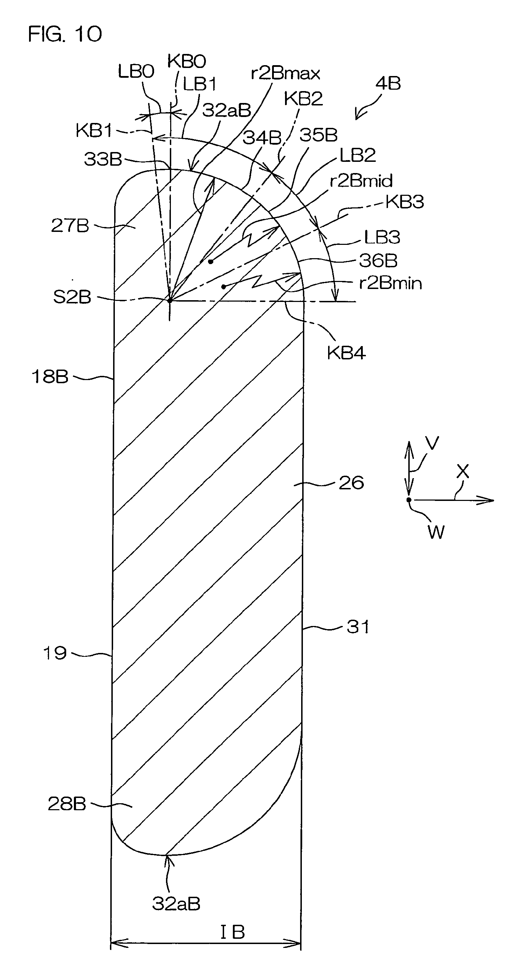

It should be appreciated that the invention is not limited to the contents of the embodiments described above, and can be modified in various manners within the scope of the appended claims.
For example, as are shown in FIG. 9 and FIG. 10, second pins 4B having no rib portions may be used. Each of one end portion 27B and the other end portion 28B of the second pin 4B includes a curved surface portion 32aB. These curved surface portions 32aB are received, respectively, by receiving portions 38 and 39 of the front through-hole 9 in the link 2. Because the curved surface portion 32aB of the one end portion 27B and the curved surface portion 32aB of the other end portion 28B are of the same configuration, the curved surface portion 32aB of the one end portion 27B will be chiefly described.

The one end portion 27B has an apex portion 33B on the outside in the chain diameter direction of the second pin 4B generally at the intermediate portion thereof in the circumferential direction. The curved surface portion 32aB includes a first portion 34B including the apex portion 33B, a second portion 35B disposed adjacently to the first portion 34B ahead the first portion 34B in the chain travel direction X, and a third portion 36B disposed adjacently to the second portion 35B ahead the second portion 35B in the chain travel direction X and continuing to the front portion 31.

The first portion 34B is formed as a portion having a curvature radius r2Bmax which is the largest in the curved surface portion 32aB. The first portion 34B is defined between first and second planes KB1 and KB2. Each of the first and second planes KB1 and KB2 is a plane including an axis S2B passing through the curvature center line of the curvature radius r2Bmax (first portion 34B) and extending in the longitudinal direction of the second pin 4B (the axis extending perpendicularly to the sheet surface of FIG. 6).

The first plane KB1 has a predetermined angle LB0 with respect to a reference plane KB0. The reference plane KB0 is a plane including the apex portion 33B in the first portion 34B of the second pin 4B and in parallel with the rear portion 19. The reference plane KB0 can also be said as a plane including the axis S2B and in parallel with the rear portion 19.
The first plane KB1 has an angle LB0 (also referred to as the contained angle, including 0º) of 0 to 10Q with respect to the reference plane KB0 and thereby inclines to the side opposite to the chain travel direction X (counterclockwise direction in the drawing). In this embodiment, the angle LB0 is set, for example, to 5º. The first portion 34B includes a portion positioned rearward in the chain travel direction X with respect to the reference plane KB0.

The second plane KB2 has an angle LB1 (contained angle) of not less than 30º with respect to the first plane KB1 and thereby inclines to the chain travel direction X side (clockwise direction in the drawing). In this embodiment, the angle LB1 is set, for example, to 309.
The first portion 34B has a portion present frontward in the chain travel direction X with respect to the apex portion 33B, which is wider than a portion present rearward in the chain travel direction X with respect to the apex portion 33B.

The curvature radius r2Bmax of the first portion 34B is set to a range of 55 to 150% of the plate thickness IB of the second pin 4B (0.55IB≤r2Bmax≤1.5IB). The thickness IB is set, for example, to 1.7 mm, and accordingly r2Bmax is set to a range of 0.935 mm to 2.55 mm (0.935≤2Bmax≤2.55). The curvature radius r2Bmax of the first portion 34B is set, for example, to 1.5 mm.

The curvature radius r2Bmax of the first portion 34B is set to not less than 125% of the curvature radius r2Bmin of the third portion 36B whose curvature radius r2Bmin is the smallest in the one end portion 27B of the second pin 4. In this embodiment, the proportion of the r2Bmax with respect to the r2Bmin is set, for example, to 150% (r2Bmax = 1.5r2Bmin). The curvature radius r2Bmax of the first portion 34B is set, for example, to 1.5 mm, and the curvature radius r2Bmin of the third portion 36B is set, for example, to 1.0 mm.

The second portion 35B continues to the first portion 34B at one end in the circumferential direction and continues to the third portion 36B at the other end. The second portion 35B is defined between the second and third planes KB2 and KB3. The third plane KB3 is a plane including the axis S2B. The third plane KB3 has an angle LB2 of, for example, not more than 30° with respect to the second plane KB2 and thereby inclines frontward in the chain travel direction X.

The curvature radius r2Bmid of the second portion 35B is set, for example, to 1.3 mm and is made smaller than the curvature radius r2Bmax of the first portion 34B (r2Bmid<r2Bmax).
The third portion 36B is formed as a portion having the smallest curvature radius in the curved surface portion 32aB. The third portion 36B continues to the second portion 35B at one end in the circumferential direction and continues to the front portion 31b at the other end. The third portion 36B is defined between the third and fourth planes KB3 and KB4. The fourth plane KB4 is a plane including the axis S2B. The fourth plane KB4 has an angle LB3 of, for example, not more than 25Q with respect to the third plane KB3 and thereby inclines to the chain travel direction X side.

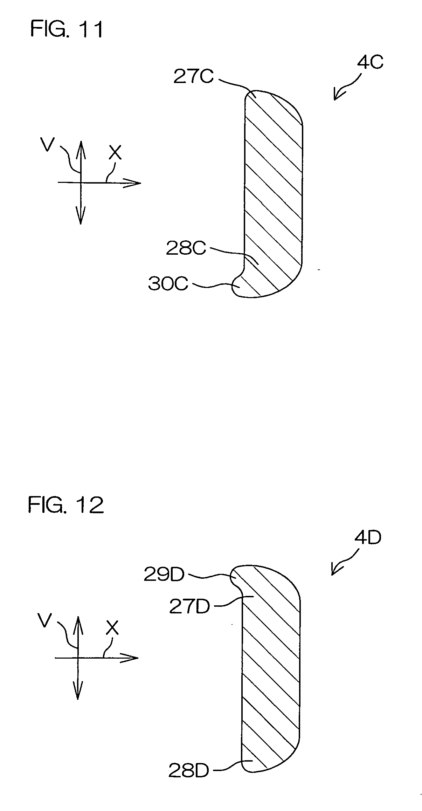

As has been described, the curvature radius r2Bmin of the third portion 36B is set, for example, to 1.0 mm, and is made smaller than both the curvature radius r2Bmax of the first portion 34B and the curvature radius r2Bmid of the second portion 35B (r2Bmin<r2Bmid<r2Bmax).
Instead of the second pin 4 and the second pin 4B as described above, a second pin 4C shown in FIG. 11 may be used. The second pin 4C having one end portion 27C and the other end portion 28C is configured in such a manner that a rib portion 30C is provided to the other end portion 28C alone.

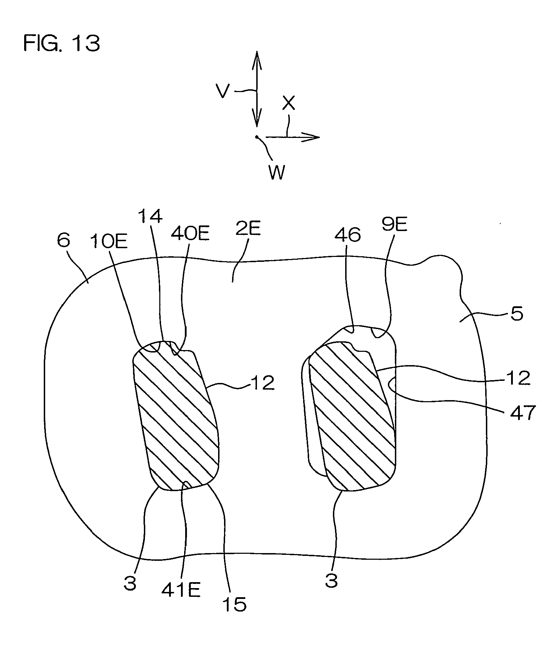

Further, a second pin 4D shown in FIG. 12 may be used as well. The second pin 4D having one end portion 27D and the other end portion 28D is configured in such a manner that a rib portion 29D is provided to the one end portion 27D alone.
It should be appreciated that the invention is not limited to the embodiments described above. For example, as is shown in FIG. 13, it may be configured in such a manner that single first pins 3 may be used as the coupling members. A front portion 47 of the peripheral portion 46 of a front through-hole 9E in a link 2E is of a flat shape orthogonal to the chain travel direction X. The front portion 12 of the first pin 3 loose-fit in the front through-hole 9E comes into rolling and sliding contact with the front portion 47 of the link 2E. Receiving portions 40E and 41E of a rear through-hole 10E in the link 2E receive the one end portion 14 and the other end portion 15 of the first pin 3, respectively, and thereby fix the first pin 3E to the link 2.

In this case, the absence of the second pins can shorten the distance (pitch) between the first pins 3 adjacent to each other in the chain travel direction X, which makes it possible to reduce the chain in size. Moreover, load per first pin 3 can be reduced by allowing many more first pins 3 to be meshed with the respective pulleys at a time. It is thus possible to achieve enhancement of allowable transmission torque and enhancement of durability.

While the embodiments of the invention have been described in detail, modifications, alterations, and equivalents of the invention readily occur to anyone skilled in the art who understands the contents. The sprit and the scope of the invention, therefore, are limited by the scope of the appended claims and their equivalents.
This application corresponds to the Japanese Patent Application No. 2004-338201 filed with the Japanese Patent Office on November 22, 2004, and the Japanese Patent Application No. 2005-301034 filed with the Japanese Patent Office on October 14, 2005, the entire contents of which are incorporated herein by reference.

## Claims

1. A power transmission chain, comprising:
a plurality of link units aligned in a chain travel direction; and
a plurality of coupling members that couple the plurality of link units to be bendable with respect to one another,
wherein:
the link unit includes a plurality of link plates aligned in a chain width direction orthogonal to a chain travel direction;
the link plate has a plurality of through-holes;
the coupling member has a power transmission member inserted through the corresponding through-holes in the corresponding link plates;
the power transmission member has a pair of end portions with respect to an orthogonal direction that is orthogonal to both the chain travel direction and the chain width direction;
the end portion of the power transmission member is received by a receiving portion provided to the corresponding through-hole in the corresponding link plate;
at least one of the end portions of the power transmission member includes a curved surface portion received by the corresponding receiving portion;
the curved surface portion includes an apex portion with respect to the orthogonal direction; and
a curvature radius of the curved surface portion is increased continuously or step by step as headed toward the apex portion.

2. The power transmission chain according to claim 1,
wherein:
the end portion of the power transmission member comes into contact with the corresponding receiving portion in a press-fit state.

3. The power transmission chain according to claim 1,
wherein:
the curved surface portion includes a plurality of portions having different curvature radii;
the plurality of portions include a first portion having a larger curvature radius than other portions; and
the curvature radius of the first portion is set to a range of 20 to 25% of an alignment pitch of the power transmission members with respect to the chain travel direction.

4. The power transmission chain according to claim 3,
wherein:
the plurality of portions include a second portion having a curvature radius that is large next to the curvature radius of the first portion; and
the curvature radius of the second portion is set to 55 to 80% of the curvature radius of the first portion.

5. The power transmission chain according to claim 4,
wherein:
the plurality of portions include a third portion having a curvature radius that is large next to the curvature radius of the second portion; and
the curvature radius of the third portion is set to 20 to 45% of the curvature radius of the first portion.

6. The power transmission chain according to claim 1,
wherein:
the power transmission member is in a form of a plate that is long in the chain width direction;
the curved surface portion includes a portion having a largest curvature radius in the curved surface portion; and
the largest curvature radius is set to 55 to 150% of a plate thickness of the corresponding power transmission member.

7. The power transmission chain according to claim 1,
wherein:
the curved surface portion includes a portion having a largest curvature radius and a portion having a smallest curvature radius in the curved surface portion; and
the largest curvature radius is set to not less than 125% of the smallest curvature radius.

8. The power transmission chain according to claim 1,
wherein:
the power transmission member has a longitudinal direction along the chain width direction;
the curved surface portion includes a portion having a largest curvature radius in the curved surface portion;
the portion having the largest curvature radius is defined between first and second planes;
each of the first and second planes includes an axis passing through a curvature center of the portion having the largest curvature radius and extending along the longitudinal direction of the corresponding power transmission member; and
a contained angle between the first plane and the second plane is not less than 30 degrees.

9. The power transmission chain according to claim 1,
wherein:
the coupling member includes a first power transmission member to be engaged with sheave surfaces of a pulley and a second power transmission member;
either one of the first and second power transmission members moves relatively with respect to the other power transmission member while coming into contact with the other power transmission member in a contact state including at least one of rolling contact and sliding contact in association with bending of the power transmission chain.

10. The power transmission chain according to claim 9,
wherein:
the first power transmission member has a longitudinal direction along the chain width direction;
the curved surface includes a curved surface portion provided to the first power transmission member;
the curved surface portion provided to the first power transmission member includes a portion having a largest curvature radius in the curved surface portion;
the portion having the largest curvature radius is defined between first and second planes;
each of the first and second planes includes an axis passing through a curvature center of the portion having the largest curvature radius and extending in the longitudinal direction of the first power transmission member; and
a contained angle between the first plane and the second plane is not less than 30 degrees.

11. The power transmission chain according to claim 9,
wherein:
the second power transmission member has a longitudinal direction along the chain width direction;
the curved surface portion includes a curved surface portion provided to the second power transmission member;
the curved surface portion provided to the second power transmission member includes a portion having a largest curvature radius in the curved surface portion;
the portion having the largest curvature radius is defined between first and second planes;
each of the first and second planes includes an axis passing through a curvature center of the portion having the largest curvature radius and extending along the longitudinal direction of the second power transmission member; and
a contained angle between the first plane and the second plane is not less than 30 degrees.

12. The power transmission chain according to claim 9,
wherein:
the second power transmission member has a longitudinal direction along the chain width direction;
the curved surface includes a curved surface portion provided to at least one end portion of the second power transmission member;
a rib portion extending in a direction opposite to the chain travel direction is provided to the at least one end portion of the second power transmission member; and
the curved surface portion provided to the at least one end portion of the second power transmission member includes a curved surface portion provided to the rib portion.

13. The power transmission chain according to claim 12,
wherein:
the first power transmission member includes a contact-avoiding portion to avoid contact with the rib portion of the corresponding second power transmission member.

14. The power transmission chain according to claim 13,
wherein:
the first power transmission member of the coupling member includes a plurality of types of first power transmission members; and
a shape of the contact-avoiding portion is different from one type of the first power transmission members to another.

15. The power transmission chain according to claim 13,
wherein:
the contact-avoiding portion includes a concave portion.

16. The power transmission chain according to claim 9,
wherein:
the link plate of the link unit includes first and second through-holes for the corresponding coupling members to be inserted therethrough;
the first and second through-holes in the link plate are aligned in the chain travel direction;
the corresponding first power transmission member is fit in the first through-hole in the link plate in such a manner so as to allow a relative movement and the corresponding second power transmission member is fit therein in such a manner so as to restrict a relative movement; and
the corresponding second power transmission member is fit in the second through-hole in the link plate in such a manner so as to allow a relative movement and the corresponding first power transmission member is fit therein in such a manner so as to restrict a relative movement.

17. The power transmission chain according to claim 9,
wherein:
a mutual contact portion of the first and second power transmission members of the coupling member undergoes displacement along predetermined movement locus in association with bending of the power transmission chain; and
the predetermined movement locus has an involute shape.

18. The power transmission chain according to claim 9,
wherein:
contact cycles in which the first power transmission members successively come into contact with the sheave surfaces of the pulley are randomized.

19. A power transmission device, comprising:
a pair of pulleys each having a pair of mutually opposed sheave surfaces each in a form of a circular conical surface,
wherein power is transmitted between the pair of pulleys via the power transmission chain set forth in any one of claims 1 through 18.
